# EUROPÄISCHE PATENTSCHRIFT

(11) **EP 0 630 576 B1**
(45) Veröffentlichungstag und Bekanntmachung des Hinweises auf die Patenterteilung: **03.11.1999**
(21) Anmeldenummer: 94107174.8
(22) Anmeldetag: 07.05.1994
(51) Int. Cl.: A23K 1/16, A23K 1/18

(54) **Tiernahrungsmittel mit trink- oder kaubarer Konsistenz**
Animal feed with a drinkable or chewable consistency
Nourriture pour animaux à consistance buvable ou mâchable

(30) Priorität: 23.06.1993 DE 4320816
(43) Veröffentlichungstag der Anmeldung: 28.12.1994
(73) Patentinhaber: Saric, Krunoslav Dr., D-27283 Verden an der Aller (DE)
(72) Erfinder: Saric, Krunoslav Dr., D-27283 Verden an der Aller (DE)
(74) Vertreter: Hoffmeister, Helmut, Dr. Dipl.-Phys.

(56) Entgegenhaltungen:
- EP-A- 0 171 026
- EP-A- 0 293 935
- WO-A-91/13076
- DE-B- 1 140 058
- GB-A- 1 360 580
- GB-A- 2 112 001
- PATENT ABSTRACTS OF JAPAN vol. 17 no. 205 (C-1051) ,22.April 1993 & JP-A-04 349855 (NIHON NOUSAN KOUGIYOU KK) 4.Dezember 1992,

## Beschreibung

Die Erfindung betrifft ein Tiernahrungsmittel mit trink- oder kaubarer Konsistenz, bestehend aus einer tiernahrungsüblichen Grundsubstanz und aus einem der Grundsubstanz beigefügtem zusätzlichen Anteil.

Es stellt sich die Aufgabe, ein Tiernahrungsmittel herzustellen, das neben den tiernahrungsüblichen Grundsubstanzen lösliche Ballaststoffe enthält, die als natürliche Produkte angesprochen werden können, die die Verdaulichkeit und schnelle Nährstoffaufnahme erhöhen. Der zusätzlich beigefügte Anteil soll weder Cholesterin noch Purin sowie auch kein Fett und keine Laktose enthalten, die die leichte Verdaulichkeit anstelle der Nährstoffaufnahme verhindern. Vielmehr soll das Aussehen des Tieres durch ein glänzendes Fell verbessert werden. Soweit bei der Nahrungsverdauung ein störender Kotgeruch entsteht, soll dieser reduziert werden.

Diese Aufgaben werden bei einem Tiernahrungsmittel gelöst, das aus einer tiernahrungsüblichen Grundsubstanz besteht und das gekennzeichnet ist durch einen der Grundsubstanz beigefügten zusätzlichen Anteil, der eine Mischung aus einem oder mehreren Kollagenhydrolysaten und Oligofructosen ist, wobei in dem zusätzlichen Anteil der Gehalt an Kollagenhydrolysaten im Bereich von 30 bis 95 Gew.-% und der Gehalt an Oligofructosen im Bereich von 70 bis 5 Gew.-% liegt, vorzugsweise der Gehalt an Kollagenhydrolysaten im Bereich von 75 bis 95 Gew.-% und der Gehalt an Oligofructosen im Bereich von 25 bis 5 Gew.-%. Soweit im folgenden Text und in den Ansprüchen von einer "Mischung" gesprochen wird, handelt es sich um die vorgenannte Mischung.

Kollagenhydrolysate, auch Gelatine-Hydrolysate genannt, sind modifizierte Gelatine-Produkte, die keine Gelierkraft mehr besitzen. Es sind üblicherweise hochgereinigte, geschmacksneutrale hydrolisierte Eiweiße aus Bindegeweben. Die mittleren Molekulargewichte dieser Kollagenhydrolysate liegen im Bereich von etwa 500 bis 25.000 Dalton. Derartige Kollagenhydrolysate sind kaltwasserlöslich. Es entstehen auch bei ihnen im Gegensatz zu anderen Hydrolysaten bei der Herstellung hochreiner Kollagenhydrolysate keine Bitterpeptide, wodurch man völlig geschmacksneutrale Proteine erhält. Desweiteren enthalten Kollagenhydrolysate kein Cholesterin und keine gesättigten Fettsäuren und sind frei von Purin.

Derartige Kollagenhydrolysate haben einen Eiweißgehalt von 90 - 94 Gew.-%. Durch die Beifügung vorgenannter Kollagenhydrolysate erhält das Tier einen Nahrungszusatz, der die Gelenkknorpel-Bildung fördert und den Abbau von Gelenkknorpel bei alternden Tieren verzögert. Es werden damit Arthroseerscheinungen in ihrer Heilung unterstützt. Gelenkverschleißerscheinungen werden gestoppt. Darüber hinaus haben Kollagenhydrolysate eine viskositätsstabilisierende Wirkung auf Tierfutter-Präparate, so daß deren Darreichung und Präparierung erleichtert wird.

In synergistischer Wirkung zu den Kollagenhydrolysaten stehen Oligofructosen. Letztere haben vorzugsweise zwei oder mehr, vorzugsweise maximal neun Fructose-Moleküleinheiten in ihrem Molekül, wobei das Monosaccharid Fructose durch glykosidische Verknüpfung unter Wasseraustritt zu Mehrfachzuckern zusammentritt. Es erfolgt eine β(1-2)-Bindung. Die endständige Moleküleinheit kann eine Fructose- oder Glukosemoleküleinheit sein. Oligofructosen kommen natürlich vor, beispielsweise in der Cichorienwurzel (Cichorium intybus), in der Artischocke (Cynara scolymus), in der Topinambur-Wurzel (Helianthus tuberosus) oder in der schwarzwurzel (Scorzonera hispanica).

Aus den pflanzlichen Bestandteilen, beispielsweise aus den Cichorienwurzeln, wird durch Extraktion, anschließende Hydrolyse und Raffination sowie nachfolgender Konzentration ein standardisiertes Oligofructose-Produkt gewonnen. Die Oligofructosen können vorzugsweise in Form eines Zuckersirups gewonnen werden und dem Nahrungsmittel beigefügt werden, wobei sich die eingangs angegebenen Prozent-Teile aus dem Gehalt an reinen Oligofructosen ergeben.

In-Vitro-Tests haben gezeigt, daß Oligofructosen hauptsächlich von Bakterien der Familie Bifidus als Energiequelle verwendet werden. Auch das Wachstum von Lactobacillus acidophilus wird spezifisch stimuliert. Dagegen werden die den starken Kotgeruch hervorrufenden "Putrefaktionsbakterien" wie Escherichia coli und Clostridium perfringens in ihrer Entwicklung unterdrückt, da sie Oligofructosen als Energiequelle kaum nutzen können; im Gegenteil, das Wachstum von Clostridium perfringens wird stark inhibiert.

Wissenschaftliche Untersuchungen zeigen, daß die Anwesenheit von Bifidusbakterien im Dickdarm einen günstigen Einfluß hat. Bifidusbakterien wandeln verschiedene Zucker in L-Milchsäure und Essigsäure um, was für den Organismus eine günstige Absenkung des pH-Wertes im Dickdarm mit sich bringt. Sie inhibieren das Wachstum von vielen für den Organismus schädlichen Bakterien. Sie stellen eine Reihe von Vitaminen her, hauptsächlich die der Gruppe B. Sie produzieren keine oder wenig unerwünschte Stoffwechselprodukte.

Damit ist für den Tierorganismus die Kombination von Kollagenhydrolysaten und Oligofructosen in der vorgenannten Zuckermenge eine willkommene Bereicherung der Nahrung, der Ballaststoffzugabe und der Unterhaltung einer gewünschten Dickdarm-Bakterienflora.

Dem Tierfutter sollten allerdings solche Bestandteile nicht oder nur in geringen Mengen beigemischt werden, die den vorgenannten Wirkungen entgegenstehen, insbesondere den Cholesteringehalt im Blut erhöhen. Verzichtet sollte daher unter anderem auf folgende Anteile:
Hühnereigelb
Lactose
Weizenkleber
Purin-haltige Stoffe
Hefe

Dagegen können pflanzliche Öle mit hohem Anteil an ungesättigten Fettsäuren beigefügt werden, auch zu den Tiergetränken.

Das vorgenannte Tiernahrungsmittel wird vorzugsweise als Tiergetränk dargeboten, wobei die vorgenannte Mischung mit einem Anteil von 5 bis 60 Gew.-% im Trinkwasser gelöst wird. Es kann aber auch ein kaubares Tiernahrungsmittel auf Cerealien-Basis hergestellt werden, bei dem ein Anteil von 5 bis 85 Gew.-% der vorgenannten Mischung beigemischt wird. Das zubereitete Tiernahrungsmittel sollte einen Feuchtgehalt von 5 bis 35 Gew.-% aufweisen, um leicht aufgenommen und verdaut werden zu können.

Beispiele für Rezepturen seien wie folgt angegeben:

### 1. Beispiel:

### Tiergetränk als Ergänzungsnahrung für Pferde, Katzen und Hunde:

Ein solches Tiergetränk wird wie folgt gemischt:

| | |
|---|---|
| Hochgereinigtes Kollagenhydrolysat "Gelita-Sol", Hersteller Deutsche Gelatine-Fabriken Stoess & Co. GmbH | 5 - 50 Gew.-% |
| Mixtur aus L-Cystin und D,L-Methionin | 0,01 - 3 Gew.-% |
| Standardisiertes Vitamin-Mineralstoff-Gemisch | 0,1 - 1,5 Gew.-% |
| Dickungsmittel, z. B. Johanniskernmehl | 0,1 - 3 Gew.-% |
| Oligofructose | 0,5 - 10 Gew.-% |
| Trinkwasser Rest, vorzugsweise bis | 94 Gew.-% |

Der pH-Wert stellt sich auf 5 - 7 ein. Das Produkt wird sterilisiert und abgefüllt.

### 2. Beispiel:

### Tiergetränk als Alleinfuttermittel für Hunde, die an Übergewicht (Adipositas) leiden.

Ein solches Tiergetränk wird wie folgt gemischt:

| | |
|---|---|
| Kollagenhydrolysat | 4.0 - 7,0 Gew.-% |
| standardisierte Mischung aus L-Cystin und D,L-Methionin | 0,01 - 1,5 Gew.-% |
| getrocknetes Hühnereiweiß | 1,0 - 3,0 Gew.-% |
| Sojaeiweiß | 1,0 - 3,0 Gew.-% |
| standardisierte Vitamin-Mineralstoff-Mischung | 0,1 - 1,5 Gew.-% |
| Oligofructose | 4,0 - 6,5 Gew.-% |
| hochgereinigtes Zellulose-Pulver als nicht löslicher Ballaststoff | 0 - 2,5 Gew.-% |
| Pflanzenölmixtur, beispielsweise aus Soja-und Erdnußöl | 1,0 - 3,5 Gew.-% |
| Rest Trinkwasser | |

Der pH-Wert wird auf 5 - 7 eingestellt.

### 3. Beispiel:

### Snack-Produkt in Form von Streifen oder Würfeln für Pferde, Katzen und Hunde

| | |
|---|---|
| Hochgereinigtes Kollagenhydrolysat wie im Beispiel 1 | 5 - 70 Gew.-% |
| standardisierte Mischung aus L-Cystin und D,L-Methionin | 0,01 - 5 Gew.-% |
| getrocknetes Hühnereiweiß | 0 - 10 Gew.-% |
| standardisierte Vitamin-Mineralstoffmischung | 0,1 - 1,5 Gew.-% |
| Cerealien, beispielsweise Haferflocken | 30 - 70 Gew.-% |
| Trinkwasser | 20 - 50 Gew.-% |
| Oligofructosen | 0,50 - 15 Gew.-% |

Das Produkt wird im Extruder geknetet und bei einem Feuchtigkeitsgehalt von 5 - 35 Gew.-% extrudiert und anschließend getrocknet oder gebacken. Nach üblicher Sterilisierung und Verpackung kann das Produkt ausgeliefert werden.

## Patentansprüche

1. Tiernahrungsmittel mit trink- oder kaubarer Konsistenz, bestehend aus einer tiernahrungsüblichen Grundsubstanz und gekennzeichnet durch einen der Grundsubstanz beigefügten zusätzlichen Anteil, der eine Mischung aus einem oder mehreren Kollagenhydrolysaten und Oligofructosen ist, wobei in dem zusätzlichen Anteil der Gehalt an Kollagenhydrolysaten im Bereich von 30 bis 95 Gew.-% und der Gehalt an Oligofructosen im Bereich von 70 bis 5 Gew.-% liegt.

2. Tiernahrungsmittel nach Anspruch 1, dadurch gekennzeichnet, daß in der zugesetzten Mischung der Gehalt an Kollagenhydrolysaten im Bereich von 75 - 95 Gew.-% und der Gehalt an Oligofructosen im Bereich von 25 bis 5 Gew.-% liegt.

3. Tiernahrungsmittel nach Anspruch 1 oder 2, dadurch gekennzeichnet, daß die Kollagenhydrolisate hochgereinigte, geschmacksneutrale hydrolisierte Eiweiße aus Bindegeweben sind.

4. Tiernahrungsmittel nach Anspruch 1 bis 3, dadurch gekennzeichnet, daß die Moleküle der Oligofructosen aus zwei und mehr, vorzugsweise maximal neun Fructose-Moleküleinheiten bestehen, die β(1-2) gebunden sind, wobei die endständige Moleküleinheit eine Fructose- oder Glukosemoleküleinheit ist.

5. Tiergetränk nach einem der vorhergehenden Ansprüche, dadurch gekennzeichnet, daß die vorgenannte Mischung mit einem Anteil von 5 bis 60 Gew.-% in Trinkwasser gelöst ist.

6. Tiergetränk nach einem der vorhergehenden Ansprüche, dadurch gekennzeichnet, daß dem Tiergetränk Pflanzenöl(e) mit hohem Anteil an ungesättigten Fettsäuren in einem Anteil von 1 - 5 Gew.-% beigefügt werden.

7. Kaubares Tiernahrungsmittel nach einem der vorhergehenden Ansprüche, dadurch gekennzeichnet, daß einem vorhandenen Tierfutter ein Anteil von 5 bis 85 Gew.-% der vorgenannten Mischung beigemischt wird.

8. Kaubares Tiernahrungsmittel nach Anspruch 7, dadurch gekennzeichnet, daß das zubereitete Tiernahrungsmittel einen Feuchtegehalt von 5 bis 35 Gew.-% aufweist.

## Claims

1. An animal feed of drinkable or chewable consistency, consisting of a base substance conventional in animal feeds and characterised by an additional content, added to the base substance, which is a mixture of one or more collagen hydrolysates and oligofructoses, the content of collagen hydrolysates being in the range from 30 to 95% by weight and the content of oligofructoses in the range from 70 to 5% by weight in the additional content.

2. An animal feed according to Claim 1, characterised in that the content of collagen hydrolysates is in the range from 75 to 95% by weight and the content of oligofructoses in the range from 25 to 5% by weight in the added mixture.

3. An animal feed according to Claim 1 or 2, characterised in that the collagen hydrolysates are highly purified, neutral-tasting hydrolyzed proteins from connective tissue.

4. An animal feed according to Claims 1 to 3, characterised in that the molecules of the oligofructoses consist of two or more, preferably a maximum of nine, fructose molecular units which are β(1-2) bonded, the terminal molecular unit being a fructose or glucose molecular unit.

5. An animal drink according to one of the preceding claims, characterised in that the above mixture is dissolved in drinking water in a proportion of 5 to 60% by weight.

6. An animal drink according to one of the preceding claims, characterised in that vegetable oil(s) having a high content of unsaturated fatty acids are added to the animal drink in a proportion of 1 - 5% by weight.

7. A chewable animal feed according to one of the preceding claims, characterised in that a proportion of 5 to 85% by weight of the above mixture is added to existing animal fodder.

8. A chewable animal feed according to Claim 7, characterised in that the prepared animal feed has a moisture content of 5 to 35% by weight.

## Revendications

1. Nourriture pour animaux à consistance buvable ou mâchable, gui se compose d'une substance de base habituelle comme nourriture pour animaux et caractérisée par une fraction additionnelle, ajoutée à la substance de base, qui est un mélange d'un ou plusieurs hydrolysats de collagènes et d'oligofructoses, la teneur en hydrolysats de collagènes étant comprise dans une plage de 30 à 95% en poids et la teneur en oligofructoses dans une plage de 70 à 5% en poids, dans la fraction additionnelle.

2. Nourriture pour animaux selon la revendication 1, caractérisée en ce que la teneur en hydrolysats de collagènes est comprise dans une plage de 75 à 95% en poids et la teneur en oligofructoses est comprise dans une plage de 25 à 5% en poids, dans le mélange ajouté.

3. Nourriture pour animaux selon la revendication 1 ou 2, caractérisée en ce que les hydrolysats de collagènes sont des albumens hydrolysés, hautement purifiés, neutres au goût, de tissus conjonctifs.

4. Nourriture pour animaux selon l'une des revendications 1 à 3, caractérisée en ce que les molécules des oligofructoses se composent de deux unités moléculaires de fructose ou davantage, de préférence au maximum neuf, qui sont reliées β(1-2), l'unité moléculaire finale étant une unité moléculaire de fructose ou de glucose.

5. Boisson pour animaux selon l'une quelconque des revendications précédentes, caractérisée en ce que le mélange mentionné ci-dessus est dissout selon une teneur de 5 à 60% en poids dans de l'eau potable.

6. Boisson pour animaux selon l'une quelconque des revendications précédentes, caractérisée en ce qu'une ou plusieurs huiles végétales à teneur élevée en acides gras non saturés sont ajoutées selon une fraction de 1 à 5% en poids à la boisson pour animaux.

7. Nourriture mâchable pour animaux selon l'une quelconque des revendications précédentes, caractérisée en ce qu'une fraction de 5 à 85% en poids du mélange mentionné ci-dessus est ajoutée à un aliment existant.

8. Nourriture mâchable pour animaux selon la revendication 7, caractérisée en ce que la nouriture pour animaux préparée présente une teneur en humidité de 5 à 35% en poids.
